(19) Europäisches Patentamt
European Patent Office
Office européen des brevets

(11) Numéro de publication: **0 360 657 A1**

# (12) DEMANDE DE BREVET EUROPEEN

(21) Numéro de dépôt: 89402454.6

(22) Date de dépôt: 08.09.89

(51) Int.Cl.5: G 01 J 3/46
A 61 C 19/04

(30) Priorité: 09.09.88 FR 8811788

(43) Date de publication de la demande:
28.03.90 Bulletin 90/13

(84) Etats contractants désignés:
AT BE CH DE ES FR GB GR IT LI LU NL SE

(71) Demandeur: BERTIN & CIE
B.P. nr. 3
F-78373 Plaisir Cédex (FR)

(72) Inventeur: Dordet, Yves, Pierre
Les Terres Rouges 26 CD 58
F-13590 Meyteuil (FR)

Decaudin, Jean-Michel
24 Allée Jean-Sébastien Bach
F-13880 Velaux (FR)

Duret, François
Draye des Vignes
F-38690 Le Grand Lemps (FR)

(74) Mandataire: Ramey, Daniel et al
*Cabinet Ores 6 Avenue de Messine*
F-75008 Paris (FR)

## (54) Procédé de détermination de la couleur d'un objet, en particulier d'une prothèse dentaire.

(57) Procédé de détermination de la couleur d'un objet (10) tel qu'une dent, par mesure de sa réflectance spectrale diffuse au moyen d'un spectromètre (20), de détecteurs (22) et de circuits électroniques de traitement (24,26,28) associés à un micro-processeur (32), consistant à déterminer l'écart chromatique total entre la couleur de la dent et celle d'un nuancier dans un espace uniforme L*, a*, b*, et l'écart quadratique moyen entre la réflectance spectrale diffuse de la dent et celle des couleurs d'un nuancier, pour déterminer la couleur de prothèse.

FIG.1

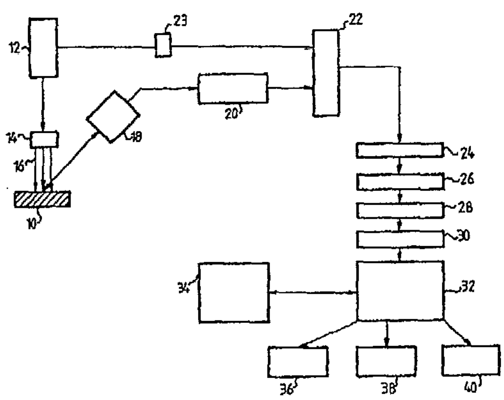


EP 0 360 657 A1

**Description**

**PROCEDE DE DETERMINATION DE LA COULEUR D'UN OBJET, EN PARTICULIER D'UNE PROTHESE DENTAIRE**

L'invention concerne un procédé de détermination de la couleur à donner à un objet, en particulier à une prothèse dentaire, à partir de la détermination de la couleur d'un autre objet, tel qu'une dent adjacente dans la bouche d'un patient.

On sait qu'il est essentiel qu'une prothèse dentaire (par exemple une couronne, une dent à pivot, un bridge, etc..) ait une couleur aussi proche que possible de celle des dents adjacentes, pour tous les types d'éclairage que l'on peut rencontrer.

Actuellement, la détermination de la couleur d'une prothèse est faite le plus souvent à vue, en général par un dentiste qui compare les couleurs d'un ou de plusieurs nuanciers aux dents de son patient. Cette façon de procéder donne des résultats qui dépendent nécessairement de la capacité du dentiste à apprécier les différences entre des couleurs très voisines et qui, pour cette raison, ne sont pas toujours satisfaisantes.

Il arrive également que la couleur ainsi choisie dans un nuancier, soit très proche de celle des dents adjacentes lorsqu'elles sont éclairées par une source de lumière d'un type donné, mais qu'elle soit assez éloignée de celle des dents adjacentes lorsqu'elles sont éclairées par une source lumineuse d'un autre type (phénomène de métamérisme).

On a déjà proposé, pour déterminer la couleur d'un objet, par exemple d'un dent, d'utiliser un appareil comprenant un spectromètre, permettant de mesurer la réflectance spectrale diffuse de la dent en d'en déduire les composantes trichromatiques X, Y, Z de la couleur de la dent, au moyen desquelles on peut reconstituer cette couleur à partir de trois couleurs primaires. Toutefois, la connaissance de ces composantes trichromatiques pour un éclairage donné ne permet pas de déterminer les va leurs de ces composantes pour un autre type d'éclairage. Aussi, pour obtenir de bons résultats avec ces appareils, il faut réaliser des mesures de couleurs pour plusieurs types d'éclairage différents, ce qui est un inconvénient majeur et qui multiplie les risques d'erreurs.

L'invention a notamment pour but d'éviter ces inconvénients de la technique antérieure connue.

Elle a pour objet un procédé de détermination de la couleur à donner à une prothèse dentaire, à partir d'une mesure unique de la couleur d'une dent adjacente, avec la garantie que la couleur de la prothèse et celle de la dent adjacent seront identiques ou quasi-identiques, quel que soit le type d'éclairage.

L'invention a encore pour objet un procédé de ce type, permettant de déterminer et de visualiser les couleurs apparentes d'une prothèse dentaire et des dents adjacentes pour différents types d'éclairage, à partir d'une mesure réalisée dans un éclairage quelconque.

Elle a encore pour objet un procédé du type précité, permettant de déterminer le ou les pigments nécessaires, ainsi que leur concentration, qui doivent être ajoutés à une résine ou autre base de couleur déterminée, pour obtenir une prothèse ayant une couleur identique à celle d'une dent adjacente.

Le procédé selon l'invention, qui consiste à mesurer la réflectance spectrale diffuse d'une dent adjacente à la prothèse, au moyen d'un faisceau lumineux réfléchi par la dent et transmis à un spectromètre, à déterminer les composantes trichromatiques de la couleur de la dent pour un éclairage donné et, par comparaison à des couleurs d'un nuancier dont les caractéristiques chromatiques ont été préalablement déterminées, à choisir la couleur de prothèse qui se rapproche le plus de celle de la dent adjacente, est caractérisé en ce qu'il consiste à déterminer l'écart chromatique total $\Delta E$ dans un espace chromatique uniforme tel que le système ($L^*$, $a^*$, $b^*$) entre la dent et chaque couleur du nuancier, à déterminer l'écart quadratique moyen $\Delta Q$ entre la réflectance spectrale diffuse de la dent et celle de chaque couleur du nuancier, et à choisir la couleur du nuancier pour laquelle le couple ( $\Delta E$, $\Delta Q$) a les valeurs les plus faibles.

Le choix d'un écart chromatique total faible entre la couleur de la dent et une couleur du nuancier dans le système ($L^*$, $a^*$, $b^*$), permet de déterminer une teinte qui sera de toute façon proche de celle de la dent adjacente, tandis qu'une valeur faible de l'écart quadratique moyen entre les réflectances spectrales diffuses de la dent et de la prothèse garantit une quasi-identité de ces couleurs pour tous les types d'éclairage.

Une seule mesure sur une dent adjacente à l'emplacement de la prothèse permet donc de déterminer la couleur à donner à la prothèse qui assurera le meilleur accord sur le plan esthétique, quel que soit le type d'éclairage utilisé.

Bien entendu, cette mesure peut être répétée sur toutes les dents adjacentes à l'emplacement de la prothèse, de façon à ce que, lorsqu'il existe des différences entre les couleurs des dents adjacentes, l'on puisse effectuer une moyenne entre ces couleurs pour déterminer la couleur de la prothèse.

Selon une autre caractéristique de l'invention, le procédé consiste également à déterminer, par différence entre les réflectances spectrales diffuses de la dent et de la couleur choisie pour la prothèse, le type et la concentration du ou des pigments qui doivent être ajoutés à cette couleur, pour obtenir une identité parfaite ou quasi-parfaite entre la couleur définitive de la prothèse et celle de la dent adjacente. On peut ainsi automatiser complètement, et de façon sûre, la détermination de la composition d'une résine de prothèse dentaire.

L'invention prévoit encore d'utiliser une source lumineuse sensiblement equi-énergétique pour effectuer les diverses mesures de couleurs.

On obtient ainsi une information significative sur tout le spectre visible.

Le procédé selon l'invention consiste également, préalablement à la mesure sur la dent, à effectuer une opération de calibrage, par mesure de la

réflectance spectrale diffuse d'un échantillon étalonné de référence, et à prendre en compte le rapport entre cette réflectance mesurée et une valeur pré-établie de la réflectance de l'échantillon de référence, pour la détermination de la réflectance spectrale diffuse de la dent.

L'invention prévoit également de mesurer les niveaux de flux lumineux émis par la source lors de l'opération de calibrage sur l'échantillon de référence et lors de la mesure sur la dent, et de prendre en compte le rapport de ces niveaux pour déterminer la réflectance spectrale diffuse de la dent.

On évite ainsi toute influence des éventuelles variations des caractéristiques de la source lumineuse sur la détermination de la réflectance spectrale diffuse d'une dent.

En pratique, le procédé consiste également à enregistrer et à conserver en mémoire les réflectances spectrales diffuses des couleurs d'un nuancier, et leurs coordonnées trichromatiques dans un espace chromatique donné, ainsi que la réflectance spectrale diffuse d'un échantillon étalonné de référence.

L'invention s'applique bien entendu à la détermination des couleurs d'objets autres que des dents.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :

la figure 1 représente schématiquement un appareil d'exécution du procédé selon l'invention ;

la figure 2 est un organigramme des principales étapes du procédé selon l'invention ;

la figure 3 représente les deux courbes de réflectance spectrale diffuse d'une dent et d'une couleur d'un nuancier ;

la figure 4 représente la position de la couleur d'une dent dans l'espace (L*, a*, b*), et les positions de plusieurs couleurs du nuancier ;

La figure 5 représente la différence des absorbances spectrales d'une dent et de la couleur d'un nuancier, pour la détermination des pigments à ajouter à cette couleur.

On se réfère d'abord à la figure 1, où on a désigné par la référence 10 une dent, adjacente à l'emplacement d'une prothèse, et dont on veut déterminer la couleur. L'appareil utilisé pour cela comprend une source lumineuse 12 associée à un système optique 14 permettant d'éclairer la dent 10 par un faisceau 16 de rayons lumineux.

De préférence, les rayons lumineux du faisceau 16 sont sensiblement parallèles, pour éclairer perpendiculairement la dent 10 de façon homogène sur une grande partie de sa surface.

Un système optique 18, orienté à 45° du faisceau lumineux 16, permet de capter la lumière réfléchie et diffusée par une petite partie de la surface éclairée de la dent.

De cette façon, la mesure qui sera effectuée tient compte, non seulement de la lumière réfléchie et diffusée par les couches superficielles de la dent, mais également de celle réfléchie et diffusée par ses couches plus profondes (la dent étant en matériaux partiellement translucides).

Le système optique 18 permet de former une image d'une partie de la surface éclairée de la dent sur l'entrée d'un spectromètre 20 à la sortie duquel sont placés des moyens 22 de détection, tels qu'une ou des barrettes de photodiodes au silicium.

La source lumineuse 12 est également reliée aux moyens de détection 22, ou à des moyens analogues, par un système optique 23 permettant de mesurer le niveau du flux lumineux émis par la source 12 au moment d'une mesure de couleur.

Les signaux produits par les détecteurs 22 sont traités par des circuits électroniques comprenant des moyens 24 de pré-amplification, des moyens d'échantillonnage 26, et des moyens 28 de conversion analogique-numérique, qui sont reliés par une interface appropriée 30 à un micro-processeur 32 associé à des mémoires 34, ainsi qu'à un écran de visualisation 36, à une imprimante 38 et à un clavier de commande 40.

Les principales étapes du procédé vont maintenant être décrites, en référence à la figure 2.

On suppose que les caractéristiques des couleurs d'un nuancier (c'est-à-dire leur réflectance spectrale diffuse et leurs coordonnées chromatiques dans l'espace (L*, a*, b*)) ont déjà été enregistrées dans une mémoire 34 du micro-processeur 32.

Le procédé consiste alors à effectuer tout d'abord une mesure de réflectance spectrale diffuse $R_m$ sur un échantillon de référence, pour le calibrage de l'appareil. Pour cela, l'échantillon de référence, par exemple une céramique de réflectance spectrale étalonnée, est disposé à l'emplacement voulu devant les systèmes optiques 14 et 18, et est éclairé par la source 12. La lumière réfléchie et diffusée par l'échantillon est reprise par le système optique 18, diffractée par le spectromètre 20, pour venir ensuite sur les moyens de détection 22. Simultanément, le niveau de flux lumineux $\Phi e$ émis par la source 12 est détecté et mesuré.

Il suffit ensuite d'orienter les systèmes op tiques 14 et 18 de l'appareil vers une dent 10 du patient, adjacente à l'emplacement de la prothèse à réaliser. La dent est éclairée par la source, par l'intermédiaire du système optique 14, et la lumière réfléchie est reprise par le système optique 18, transmise au spectromètre 20 et captée par des moyens de détection 22. Les signaux des photo-détecteurs sont ensuite traités par les circuits 24, 26, 28 puis par le micro-processeur 32 qui détermine la reflectance spectrale diffuse $D_m$ de la dent.

Simultanément, le niveau de flux lumineux $\Phi d$ émis par la source 12 a été mesuré.

La réflectance spectrale diffuse de la dent s'obtient, à partir des valeurs mesurées, au moyen de la relation suivante :

$$D(\lambda) = D_m(\lambda) \cdot \frac{Re(\lambda)}{R_m(\lambda)} \cdot \frac{\phi e}{\phi d}$$

où :

D (λ) = réflectance spectrale diffuse de la dent

$D_m$ (λ) = réflectance spectrale diffuse mesurée de la dent

$Re(\lambda)$ = réflectance spectrale diffuse de l'échantillon

$R_m(\lambda)$ = réflectance spectrale diffuse mesurée de l'échantillon

$\Phi e$ = niveau de flux lumineux sur l'échantillon

$\Phi d$ = niveau de flux lumineux sur la dent.

En pratique, le procédé selon l'invention permet de n'utiliser qu'un nombre limité de photo-détecteurs, par exemple inférieur à 10, car il suffit de connaître les valeurs de réflectance spectrale diffuse pour un nombre d'intervalles de longueurs d'ondes inférieur à 10.

La connaissance de la réflectance spectrale diffuse de la dent permet de déterminer les composantes trichromatiques X, Y, Z de la couleur de la dent, au moyen des relations suivantes :

$$X = \int_{\lambda} D(\lambda)\,\bar{x}(\lambda)\,d\lambda$$

$$Y = \int_{\lambda} D(\lambda)\,\bar{y}(\lambda)\,d\lambda$$

$$Z = \int_{\lambda} D(\lambda)\,\bar{z}(\lambda)\,d\lambda$$

où :

$\bar{x}(\lambda)$, $\bar{y}(\lambda)$, $\bar{z}(\lambda)$ = composantes spectrales trichromatiques de l'observateur de référence colorimétrique C.I.E.

A partir des composantes trichromatiques de la couleur de la dent, on peut calculer les coordonnées trichromatiques de cette couleur dans l'espace ($L^*$, $a^*$, $b^*$), au moyen des relations suivantes :

$L^* = 116(Y/Y_n)^{1/3} - 16$

$a^* = 500\ [(X/X_n)^{1/3} - (Y/Y_n)^{1/3}]$

$b^* = 200\ [(Y/Y_n)^{1/3} - (Z/Z_n)^{1/3}]$

avec : $X_n$, $Y_n$, $Z_n$ = composantes trichromatiques d'un stimulus blanc nominal

et $X/X_n > 0{,}01$

$Y/Y_n > 0{,}01$

$Z/Z_n > 0{,}01$

Le procédé selon l'invention consiste ensuite à calculer l'écart chromatique total entre la couleur de la dent et chaque couleur du nuancier dans l'espace ($L^*$, $a^*$, $b^*$) ainsi que l'écart quadratique moyen entre la réflectance spectrale diffuse de la dent et celle des couleurs du nuancier, au moyen des formules suivantes :

écart chromatique total $\Delta E = (\Delta L^{*2} + \Delta a^{*2} + \Delta b^{*2})^{1/2}$

écart quadratique moyen $\Delta Q = \frac{1}{n} \cdot \sum_{n} [D(\lambda_n) - C(\lambda_n)]$

où = $D(\lambda)$ = réflectance spectrale diffuse de la dent

$C(\lambda)$ = réflectance spectrale diffuse d'une couleur d'une dent, et de la courbe $C(\lambda)$ de la réflectance spectrale diffuse d'une couleur du nuancier.

En figure 4, on a représenté, dans l'espace ($L^*$, $a^*$, $b^*$), la position de la couleur D de la dent et celles de quelques couleurs C1, C2, C3, C4, C5 et C6 du nuancier. On voit que l'écart chromatique total $\Delta E$ correspond à la distance entre la position D de la couleur de la dent et la position d'une couleur C du nuancier, tandis que l'écart quadratique moyen correspond approximativement à l'aire de la surface délimitée entre les courbes $D(\lambda)$ et $C(\lambda)$.

La sélection d'un couple ( $\Delta E$, $\Delta Q$) ayant des valeurs minimales s'accompagne, si l'opérateur le souhaite, d'une visualisation sur l'écran 36 d'un ensemble représentant la prothèse et la ou les dents adjacentes, avec leurs couleurs apparentes pour différents types d'éclairage, et d'une impression, par l'imprimante 38, des caractéristiques chromatiques de la couleur de la dent et de la couleur sélectionnée de la prothèse.

Les caractéristiques chromatiques des couleurs du nuancier (réflectance spectrale diffuse et coordonnées chromatiques dans l'espace $L^*$, $a^*$, $b^*$) sont enregistrées au préalable dans une mémoire 34 du micro-processeur 32, soit en procédant de la façon indiquée plus haut, comme pour la détermination de la couleur d'une dent, soit en entrant directement des valeurs numériques dans la mémoire, au moyen du clavier 40.

La connaissance et l'enregistrement en mémoire de la réflectance spectrale diffuse de la couleur d'une dent adjacente et des réflectances spectrales diffuses des couleurs du nuancier permettent, comme représenté schématiquement en figure 5, de déterminer facilement le ou les pigments, et leur concentration, qui doivent être ajoutés à une couleur du nuancier, pour obtenir une couleur identique à celle de la dent adjacente, et cela quel que soit le type d'éclairage.

On a représenté en figure 5 une partie de la courbe $AD(\lambda)$ de l'absorbance spectrale de la dent, et une partie de la courbe $AC(\lambda)$ d'une couleur du nuancier. La courbe $AP(\lambda)$ correspond à la différence entre ces deux courbes et représente l'absorbance spectrale du pigment qu'il faudra ajouter à la couleur du nuancier pour obtenir la couleur de la dent.

L'absorbance et la reflectance spectrales sont liées par la relation :

$AD(\lambda) = -\log(D(\lambda))$

De l'absorbance $AP(\lambda)$ ainsi déterminée du pigment, on peut tirer sa concentration grâce aux équations de Beer-Lambert :

${}^{\varepsilon(\lambda).c}\,AP(\lambda) = 10^{\varepsilon(\lambda).c}$

avec : $\varepsilon(\lambda)$ = coefficient d'extinction massique du

dent. Il devient donc possible, grâce à l'invention, de piloter entièrement et automatiquement u⁻ dispositif de dosage des composants des résines utilisées pour les prothèses dentaires.

Corollairement, il résulte qu'il n'est pas nécessaire d'enregistrer dans la mémoire du micro-processeur les caractéristiques chromatiques d'un très grand nombre de couleurs, car les différences les plus importantes entre les réflectances d'une dent et d'une couleur peuvent être compensées par addition d'un ou de quelques pigments.

Pour améliorer encore les résultats, l'invention prévoit aussi de répéter la mesure de la réflectance spectrale diffuse sur d'autres dents adjacentes à l'emplacement de la prothèse. Lorsque les réflectances ainsi mesurées diffèrent les unes des autres, leur moyenne permet de déterminer la couleur de prothèse qui réalisera le meilleur accord possible avec les dents adjacentes.

On peut également répéter la mesure sur des parties différentes d'une même dent, pour réduire les risques d'erreurs.

De façon générale, le procédé selon l'invention présente les avantages suivants :

- il suffit d'une mesure unique sur une dent adjacente à l'emplacement d'une prothèse pour déterminer de façon précise et sûre la couleur à donner à une prothèse,
- l'accord entre la couleur de la prothèse et celle de la dent adjacente est réalisé pour tous les types d'éclairage,
- on peut déterminer les pigments et leur concentration qui doivent être ajoutés à une couleur particulière d'un nuancier pour obtenir exactement la couleur d'une dent adjacente à l'emplacement d'une prothèse.

Bien entendu, le procédé n'est pas limité à l'application particulière décrite, et pourrait être aussi bien mis en oeuvre pour assortir la couleur d'autres objets que des dents, par exemple pour la restauration d'objets d'art ou l'assortiment de pièces de joaillerie telles que les perles d'un collier, ou encore de tissus ou d'étoffes.

**Revendications**

1) Procédé de détermination de la couleur d'un objet, tel qu'une prothèse dentaire, à partir de la couleur d'un autre objet, tel qu'une dent adjacente dans la bouche d'un patient, consistant à mesurer la réflectance spectrale diffuse de la dent au moyen d'un faisceau lumineux réfléchi par la dent et transmis à un spectromètre, à déterminer les composantes trichromatiques de la couleur de la dent pour un éclairage donné et, par comparaison à des couleurs d'un nuancier dont les caractéristiques chromatiques sont connues, à choisir la couleur de prothèse qui se rapproche le plus de celle de la dent adjacente, caractérisé en ce qu'il consiste à déterminer l'écart chromatique total ΔE, dans un espace chromatique uniforme tel que le système ($L^*$, $a^*$, $b^*$) entre la dent et chaque couleur du nuancier, à déterminer l'écart quadratique moyen ΔQ entre la réflectance spectrale diffuse de la dent et celle de chaque couleur du nuancier, et à choisir la couleur du nuancier pour laquelle le couple (ΔE, ΔQ) a les valeurs les plus faibles.

2) Procédé selon la revendication 1, caractérisé en ce qu'il consiste à déterminer, par comparaison entre les absorbances spectrales de la dent et de la couleur choisie pour la prothèse, le type du ou des pigments qui doivent être ajoutés à la couleur choisie, ainsi que leur concentration, pour obtenir une identité parfaite ou quasi-parfaite entre la couleur de prothèse et celle de la dent adjacente.

3) Procédé selon la revendication 1 ou 2, caractérisé en ce qu'il consiste à éclairer la dent par une source lumineuse sensiblement équi-énergétique.

4) Procédé selon l'une des revendications 1 à 3, caractérisé en ce que, préalablement à la mesure sur la dent, il consiste à effectuer une opération de cali brage par mesure de la réflectance spectrale diffuse d'un échantillon étalonné de référence, et à prendre en compte le rapport entre cette réflectance mesurée et une valeur pré-établie de la réflectance de l'échantillon de référence, pour la détermination de la réflectance spectrale diffuse de la dent.

5) Procédé selon la revendication 4, caractérisé en ce qu'il consiste également à mesurer les niveaux de flux lumineux émis par la source lors de l'opération de calibrage sur l'échantillon de référence et lors de la mesure sur la dent, et à prendre en compte le rapport de ces niveaux pour déterminer la réflectance spectrale diffuse de la dent.

6) Procédé selon l'une des revendications 1 à 5, caractérisé en ce qu'il consiste, pour mesurer la réflectance spectrale diffuse de la dent, à réaliser un échantillonnage de cette réflectance pour un nombre limité de longueurs d'ondes, par exemple inférieur à 10.

7) Procédé selon l'une des revendications 1 à 6, caractérisé en ce qu'il consiste à mesurer la réflectance spectrale diffuse de plusieurs dents adjacentes à la prothèse et à calculer une moyenne de ces réflectances pour déterminer la couleur de prothèse.

8) Procédé selon l'une des revendications précédentes, caractérisé en ce qu'il consiste à enregistrer et à conserver en mémoire les réflectances spectrales diffuses des couleurs d'un nuancier et leurs coordonnées chromatiques dans un espace chromatique donné.

9) Procédé selon la revendication 8, caractérisé en ce qu'il consiste également à enregistrer et à conserver en mémoire la réflectance spectrale diffuse d'un échantillon étalonné de référence.

10) Procédé selon l'une des revendications précédentes, caractérisé en ce qu'il consiste à éclairer la dent de façon sensiblement homogène, par un faisceau de rayons lumineux parallèles sur une surface déterminée et à capter à 45° de la direction d'éclairage la

lumière diffusée par une partie centrale de cette surface.

11) Procédé selon l'une des revendications 1 à 10, caractérisé en ce qu'il consiste à visualiser sur un terminal graphique un ensemble représentant la prothèse et les dents adjacentes avec leurs couleurs apparentes respectives.

FIG.1

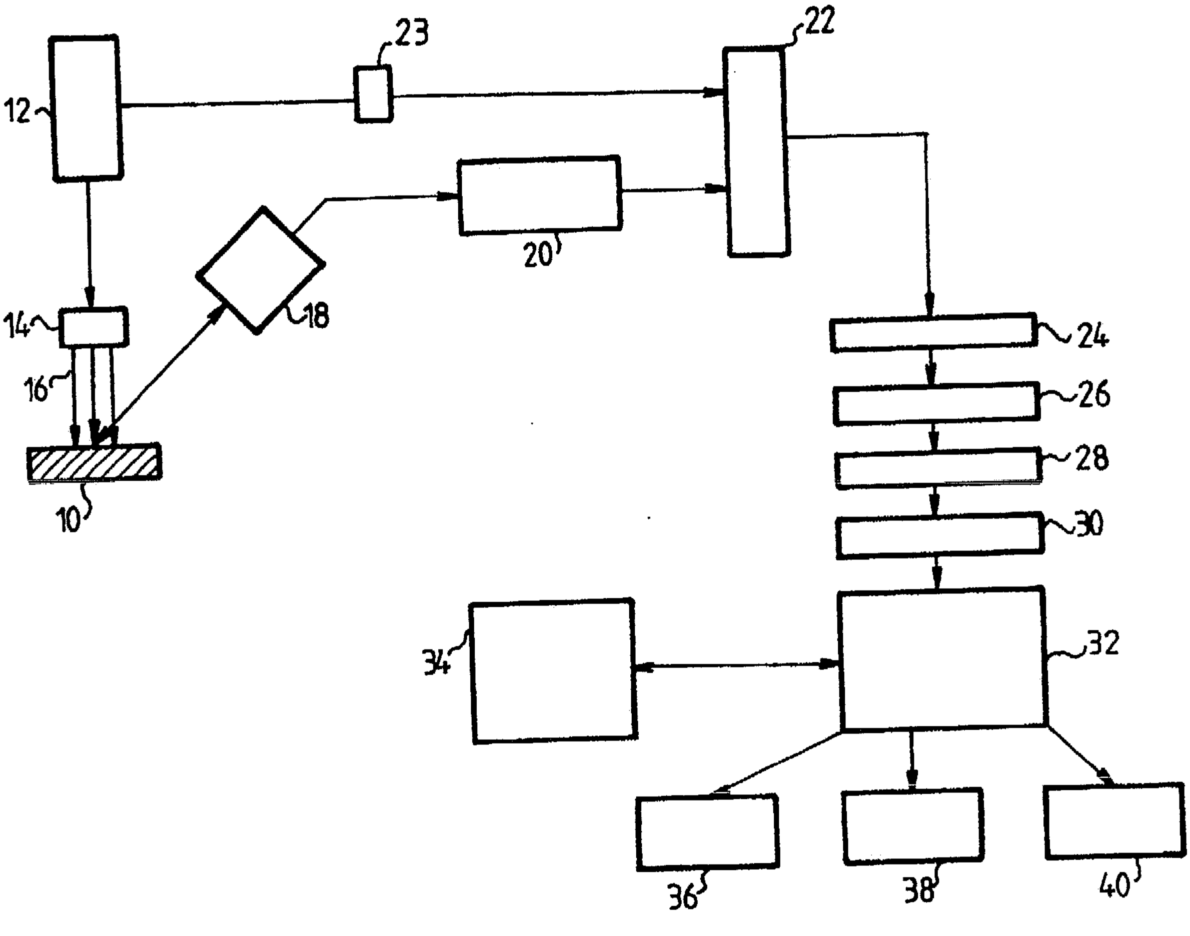

FIG. 2

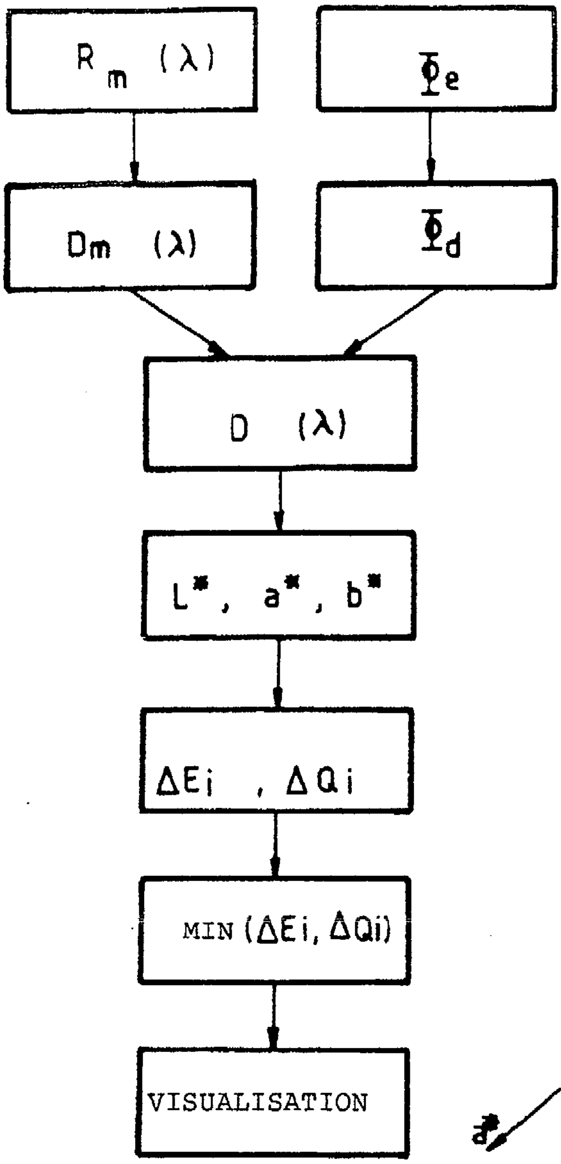


FIG.3

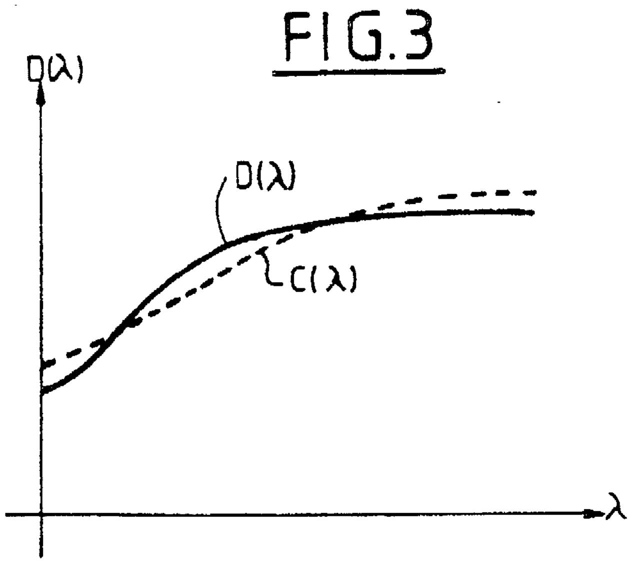


FIG.4

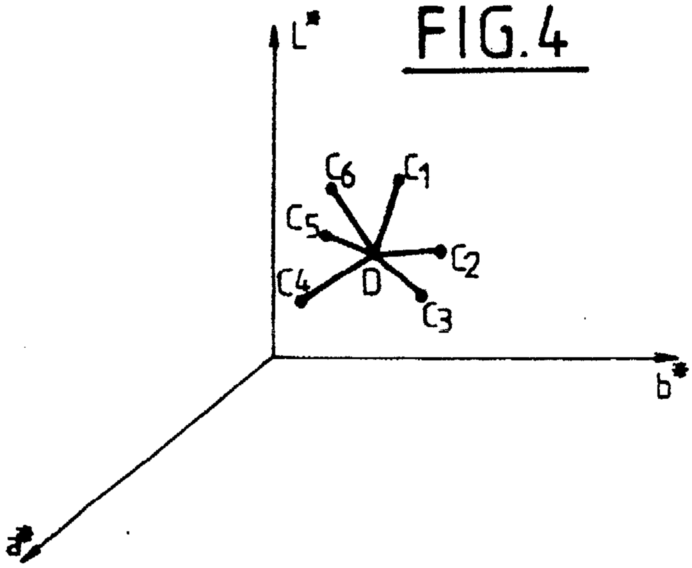


FIG.5

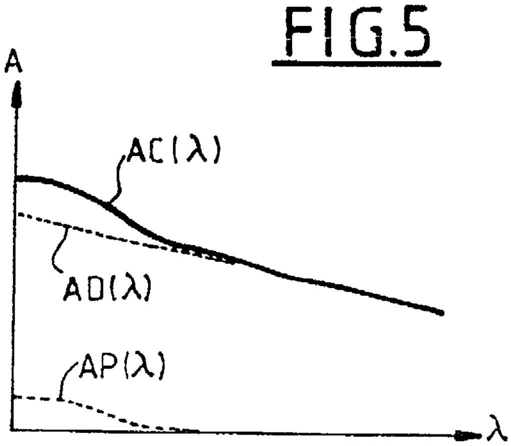

Office européen des brevets

# RAPPORT DE RECHERCHE EUROPEENNE

Numero de la demande

EP 89 40 2454

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 703 470 (BERTIN & CIE)<br>* Page 11, lignes 11-25; page 14, lignes 6-10 * | 1,2 | G 01 J 3/46<br>A 61 C 19/04 |
| A | FR-A-2 188 157 (SWINSON)<br>* Page 9, lignes 30-38 * | 1 | |
| A | US-A-3 778 541 (BOWKER)<br>* Colonne 14, lignes 49-60; colonne 15, ligne 46 - colonne 16, ligne 1 * | 1 | |
| A | TEXTILE CHEMIST AND COLORIST, vol. 15, no. 1, janvier 1983, pages 86/29-90/33, The American Association of Textile Chemists and Colorists; K. McLAREN: "The search for the ideal shade passing formula"<br>* Page 30/87, colonne de gauche, lignes 21-28; page 88/31, colonne du milieu, lignes 2-11 * | 1 | |
| A | GB-A-2 192 455 (JONES BLAIR)<br>* Page 2, lignes 36-63 * | 1 | DOMAINES TECHNIQUES RECHERCHES (Int. Cl.5)<br>G 01 J |

Le présent rapport a été établi pour toutes les revendications

| Lieu de la recherche | Date d'achèvement de la recherche | Examinateur |
|---|---|---|
| LA HAYE | 18-12-1989 | KLEIKAMP B.M.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)